(19) Europäisches Patentamt
European Patent Office
Office européen des brevets

(11) Veröffentlichungsnummer: **0 305 683 A2**

(12) # EUROPÄISCHE PATENTANMELDUNG

(21) Anmeldenummer: **88110836.9**

(51) Int. Cl.⁴: **C08G 63/68 , C08G 63/60**

(22) Anmeldetag: **07.07.88**

(30) Priorität: **04.09.87 DE 3729679**

(43) Veröffentlichungstag der Anmeldung:
**08.03.89 Patentblatt 89/10**

(84) Benannte Vertragsstaaten:
**CH DE FR GB IT LI NL**

(71) Anmelder: **HÜLS AKTIENGESELLSCHAFT
- RSP Patente / PB 15 - Postfach 13 20
D-4370 Marl 1(DE)**

(72) Erfinder: **Poll, Heinz-Günter, Dr.
Tucherweg 80
D-4010 Hilden(DE)**

(54) **Formmassen bestehend aus einem thermotropen, aromatischen Polyester.**

(57) Es sollen besser verarbeitbare Polyester zur Verfügung gestellt werden.
Dies wurde erreicht durch Polyester, enthaltend die Reste nachstehender Ausgangsmonomeren
A. 10 - 80 Mol.-% p-Hydroxibenzoesäure
B. 10 - 45 Mol.-% HOOC-Ar-COOH
C. 0 - 43 Mol.-% HO-Ar′-COOH D. 2 - 45 Mol.-%

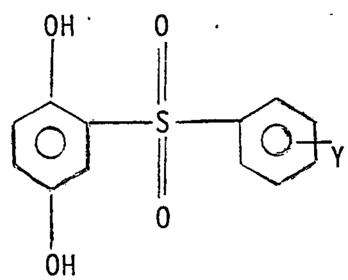

2.3 Mit Hilfe der Erfindung gelingt es, besser verarbeitbare Formmassen zur Verfügung zu stellen.

EP 0 305 683 A2

## Formmassen bestehend aus einem thermotropen, aromatischen Polyester

Gegenstand der Erfindung sind Formmassen bestehend aus einem thermotropen, aromatischen Polyester.

Thermotrope, aromatische Polyester aufgebaut aus Terephthalsäure, Isophthalsäure, p-Hydroxybenzoesäure und Bisphenolen sind bekannt (DE-OS 20 25 971). Die Schmelzpunkte der dort beschriebenen Polyester liegen im allgemeinen über 300 °C, teilweise sogar über 400 °C. Derartige Polyester lassen sich schlecht verarbeiten.

Polyester mit verbesserter Verarbeitbarkeit enthalten neben den bereits bekannten Ausgangsmonomeren z. B. noch Benzophenondicarbonsäure (DE-OS 34 27 886) oder Dihydroxibenzophenon (DE-OS 34 15 530). Nicht befriedigen konnte dagegen die Wärmeformbeständigkeit der nach diesem Stand der Technik hergestellten Formteile.

Aufgabe der Erfindung war es, die Schmelztemperatur weiter zu senken bei gleichzeitig verbesserter Wärmeformbeständigkeit (gemessen als $T_g$).

Die Aufgabe wird durch Polyester gelöst, die Reste nachstehender Ausgangsmonomeren enthalten:

A. 10 - 80 Mol.-% p-Hydroxibenzoesäure
B. 10 - 45 Mol.-% HOOC-Ar-COOH
C. 0 - 43 Mol.-% HO-Ar′-OH
D. 2 - 45 Mol.-%

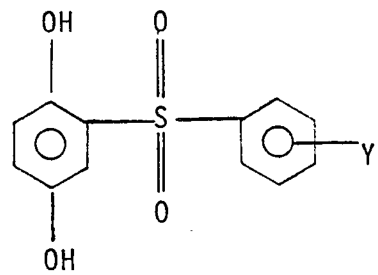

hierbei bedeutet
Ar, Ar′: 1.3- oder 1.4-Phenylen; 1.4-, 1.5-, 2.6- oder 2.7-Naphthylen
oder

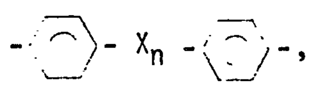

Ar und Ar′ können gleich oder ungleich sein;
X: -O-; -S-; $-SO_2$; $-CR_2$;
Y: -H; -R; -OR; -Ar″; -OAr″;
Ar″: einwertiger aromatischer Rest;
R: -H, $C_1$ - $C_4$-Alkyl;
n: 0 oder 1;

alle Mengenangaben beziehen sich auf die Summe von A. bis D. und sie müssen in der Summe 100 Mol.-% ergeben, wobei das molare Verhältnis B: (C. + D.) im Bereich von 0,9 : 1 bis 1,1 : 1 liegt.

p-Hydroxibenzoesäure (Komponete A.) wird bevorzugt in Mengen von 30 bis 70 Mol.-% eingesetzt.

Als aromatische Dicarbonsäuren (Komponente B.) werden Isophthalsäure, Terephthalsäure, 1.4-, 1.5-, 2.6-, 2.7-Naphthalindicarbonsäure, 4.4′-Diphenyletherdicarbonsäure oder 4.4′-Benzophenondicarbonsäure oder Gemische davon eingesetzt.

Als aromatische Dihydroxiverbindungen (Komponente C.) werden folgende Verbindungen eingesetzt: Hydrochinon, Resorcin, 1.3-, 1.4-, 1.5-, 2.6-, 2.7-Dihydroxynaphthalin, 4.4′- oder 3.4′-Dihydroxybiphenyl, 4.4′- oder 3.4′-Dihydroxydiphenylether, 4.4′-Dihydroxydiphenylsulfon oder Gemische davon.

Verbindungen der Komponente D. sind z. B. 2.5-Dihydroxydiphenylsulfon, 2.5-Dihydroxy-4′-methyldiphenylsulfon, 2.5-Dihydroxy-4′-phenyldiphenylsulfon oder Gemische davon.

Bevorzugt eingesetzt werden Iso- und/oder Terephthalsäure; Hydrochinon, 4.4′-Dihydroxybiphenyl; 2.5-Dihydroxydiphenylsulfon.

Die Komponente B. wird bevorzugt eingesetzt in Mengen von 15 bis 35 Mol.-%, die Komponente C. in Mengen von 10 bis 30 Mol-% und die Komponente D. in Mengen von 5 bis 35 Mol-%.

In einer weiteren bevorzugten Ausführungsform werden solche Polyester eingesetzt, in denen das Molverhältnis der Komponenten C. : D. im Bereich 4 : 1 bis 1 : 1 liegt. Das molare Verhältnis von B. : (C. + D.) bewegt sich im Bereich von 0,9 : 1 bis 1,1 : 1.

Sofern nicht ausdrücklich anders angegeben beziehen sich die Mengenangaben der Einzelkomponenten auf die Summe der Komponenten A. bis D. Hierbei müssen sie in der Summe 100 Mol.-% ergeben.

Die Polyester weisen eine reduzierte Viskosität ($eta_{red}$) von mindestens 1,0 dl/g, vorzugsweise von mindestens 2,0 dl/g auf.

Die Herstellung thermotroper, aromatischer Polyester ist grundsätzlich bekannt (Polymer 15, 527 (1974); Polymer 27, 441 (1986).

Die Reaktion erfolgt in zwei Schritten. Zuerst wird eine Um- oder Veresterung durchgeführt. Hieran schließt sich eine Polykondensation an. Die Polykondensation kann in Abwesenheit oder auch in Anwesenheit von Katalysatoren durchgeführt werden.

Bei Verwendung von Katalysatoren werden diese in Mengen von 0,001 bis 0,5 Gew.-%, vorzugsweise von 0,01 bis 0,1 Gew.-%, bezogen auf die Summe der Monomeren eingesetzt. Geeignete Katalysatoren sind z. B. Alkali- bzw. Erdalkaliacetate, Zinkacetat, Manganacetat, Germaniumdioxid, Antimontrioxid, Organozinnverbindungen sowie Titan- und Zirkonalkhoholate. Die Katalysatoren sind als solche bekannt und werden z. B. in V. V. Korshak and S. Vinogradova, Polyesters, Pergamon Press (1965) beschrieben.

Die Polyester können bekannte Verzweigungsmittel wie z. B. Trimesinsäure, Pyromellithsäure oder ein Trihydroxibenzol o. ä. enthalten.

Die Herstellung der Formmassen erfolgt nach bekannten Methoden des Standes der Technik. So wird z. B. der Polyester in einer Spritzgußmaschine aufgeschmolzen und in eine Form gespritzt.

Neben den thermotropen, aromatischen Polyestern können die Formmassen noch übliche Hilfs- und Zusatzstoffe wie Pigmente, UV-Stabilsatoren, Antioxidantien bzw. noch weitere Stabilisatoren, Füllstoffe etc. enthalten.

Die Formmassen können nach üblichen Verfahren wie Spritzguß, Extrusion o. ä. zu Formteilen, Fasern, Folien usw. verarbeitet werden.

Die erfindungsgemäßen Polyester haben überraschend hohe Glastemperaturen und weisen dementsprechend eine unerwartet gute Wärmeformbeständigkeit auf. Gleichzeitig kann - im Vergleich zum Stand der Technik - die Verarbeitungstemperatur aufgrund des geringen Schmelzpunktes abgesenkt werden.

Die reduzierte Viskosität ($eta_{red}$) wird an einer Lösung des Polyesters in Pentafluorphenol (0,1/100 Gewichtsteile) bei 60 °C bestimmt. Sofern ein Polyester aufgrund seines sehr hohen Molgewichtes in dem Lösemittel nicht gelöst werden kann, liegt seine reduzierte Viskosität auf jeden Fall im beanspruchten Bereich.

$T_g$ und $T_m$ wird mit Hilfe von DSC bei einer Aufheizrate von 10 °C/min bestimmt.

## Beispiele

### Versuch 1

Eine Mischung aus 8,3 g (0,05 mol) Terephthalsäure, 12,5 g (0,05 mol) 2.5-Dihydroxydiphenylsulfon, 13,8 g (0,10 mol 4-Hydroxybenzoesäure und 30,6 g (0,3 mol) Essigsäureanhydrid wurde unter Stickstoff auf 260 °C erhitzt. Nach 15 min bei dieser Temperatur wurde die Mischung je 15 min nacheinander bei 280 °C, 300 °C und 320 °C gehalten, wobei Essigsäure und überschüssiges Essigsäureanhydrid abdestillierten. Anschließend wurde bei 320 °C für 1 h Vakuum (< 0,1 mbar) angelegt, um die Essigsäureabspaltung zu vervollständigen.

Der erhaltene Polyester hatte eine Glastemperatur ($T_g$) von 162 °C, einen Schmelzpunkt ($T_m$) von 289 °C. Die reduzierte spezifische Viskosität ($eta_{red}$) betrug 5,44 dl/g. Oberhalb des Schmelzpunktes zeigte der Polyester im Polarisationsmikroskop eine für flüssigkristalline Verbindungen typische Schlierentextur.

Versuch 2 - 5

Die Zusammensetzungen der Polyester der Versuche 1 - 5 sowie deren Eigenschaften sind in der Tabelle zusammengefaßt. Die Herstellung dieser Polyester erfolgte analog Versuch 1.

Tabelle

| Versuch | Zusammensetzung des Polyesters[1)] [2)] | | $T_g$ [°C] | $T_m$ [°C] | $eta_{red}$ [dl/g] |
|---|---|---|---|---|---|
| 1 | PHB// TS //DHSO | 2// 1 //1 | 162 | 289 | 5,44 |
| 2 | PHB// TS/IS//DHSO | 1// 0,5/0,5//1 | 169 | 254 | $>$ 1[3)] |
| 3 | PHB// TS/IS//DHSO/HC | 1// 0,5/0,5//0,5/0,5 | 168 | 252 | $>$ 1[3)] |
| 4 | PHB// TS //DHSO | 1// 1 //1 | 170 | 266 | 4,74 |
| 5 | PHB// TS/IS//DHSO/DHB | 2//0,5/0,5//0,5/0,5 | 170 | 255 | 2,31 |

1) PHB : 4-Hydroxybenzoesäure
TS : Terephthalsäure
IS : Isophthalsäure
DHSO: 2.5-Dihydroxydiphenylsulfon
HC : Hydrochinon
DHB : 4.4'-Diyhdroxybiphenyl

2) Mengenangaben in Mol.

3) wegen des hohen Molgewichts unlöslich in Pentafluorphenol

**Ansprüche**

1. Formmassen bestehend aus einem thermotropen, aromatischen Polyester enthaltend die Reste nachstehender Augangsmonomeren.

A.10 - 80 Mol.-% p-Hydroxibenzoesäure
B. 10 - 45 Mol.-% HOOC-Ar-COOH
C. 0 - 43 Mol.-% HO-Ar'-OH D. 2 - 45 Mol.-%

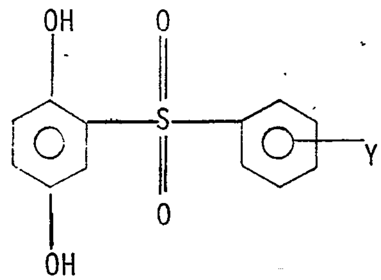

hierbei bedeutet

Ar, Ar′: 1.3- oder 1.4-Phenylen; 1.4-, 1.5-, 2.6- oder 2.7-Naphthylen

oder

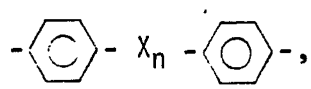

Ar und Ar′ können gleich oder ungleich sein;

X: -O-; -S-; $-SO_2$; $-CR_2$;

Y: -H; -R; -OR; -Ar″; -OAr″; Ar″: einwertiger aromatischer Rest;

R: -H, $C_1$- $C_4$-Alkyl;

n: 0 oder 1;

alle Mengenangaben beziehen sich auf die Summe von A. bis D. und sie müssen in der Summe 100 Mol.-% ergeben, wobei das molare Verhältnis B : (C. + D.) im Bereich von 0,9 : 1 bis 1,1 : 1 liegt.

2. Formmasse gemäß Anspruch 1 mit der Bedeutung von

Ar: 1.3- oder 1.4-Phenylen

oder ein Gemisch davon.

3. Formmasse gemäß den Ansprüchen 1 und 2 mit der Bedeutung von

Ar′: 1.4-Phenylen oder 4.4′-Biphenylen

oder ein Gemisch davon.

4. Formmasse gemäß den Ansprüchen 1 bis 3, die einen Polyester enthält, bei dem die Komponente D. zumindest 20 Mol.-% in der Summe der Komponenten C. und D. ausmacht.

5. Formmasse gemäß den Ansprüchen 1 bis 3, die einen Polyester enthält, bei dem die Komponente D. zumindest 30 Mol.-% in der Summe der Komponenten C. und D. ausmacht.

6. Formmasse gemäß den Ansprüchen 1 bis 5, die einen Polyester mit einer reduzierten Viskosität ($eta_{red}$) von mindestens 1,0 dl/g enthält.